# EUROPÄISCHE PATENTSCHRIFT

(11) **EP 2 125 455 B1**
(45) Veröffentlichungstag und Bekanntmachung des Hinweises auf die Patenterteilung: **11.12.2013**
(21) Anmeldenummer: 07821963.1
(22) Anmeldetag: 29.10.2007
(51) Int. Cl.: B60S 1/08, B60S 1/16

(54) **ELEKTROMOTORISCHER SCHEIBENWISCHERANTRIEB FÜR FAHRZEUGE**
ELECTRIC MOTOR-DRIVEN WINDSHIELD WIPER DRIVE FOR VEHICLES
ENTRAÎNEMENT D'ESSUIE-GLACE À MOTEUR ÉLECTRIQUE POUR VÉHICULES

(30) Priorität: 29.12.2006 DE 102006062589
(43) Veröffentlichungstag der Anmeldung: 02.12.2009
(73) Patentinhaber: Robert Bosch GmbH, 70442 Stuttgart (DE)
(72) Erfinder: REITH, Michael, 77815 Buehl-vimbuch (DE); GEUBEL, Paul, 76534 Baden-baden (DE)
(86) Internationale Anmeldenummer: PCT/EP2007/061606
(87) Internationale Veröffentlichungsnummer: WO 2008/080654

(56) Entgegenhaltungen:
- EP-A- 0 316 831
- DE-A1- 4 219 480
- US-B1- 6 431 026

## Beschreibung

Die Erfindung bezieht sich auf einen elektromotorischen Scheibenwischerantrieb für Fahrzeuge nach dem Oberbegriff des Anspruches 1.

### Stand der Technik

Elektromotorische Scheibenwischerantriebe der vorgenannten Art sind aus der Praxis bekannt und müssen schon im Hinblick auf die unterschiedlichen, insbesondere auch vom Benetzungsgrad der Scheibe abhängigen Reibwerte zwischen Wischgummi und Scheibe ein breites Leistungsspektrum abdecken, zumal bei pendelnd zwischen Endlagen schwenkbaren Scheibenwischern insbesondere im Bereich derer Endlagen ungünstige Übersetzungsverhältnisse gegeben sind. Entsprechend hoch sind die teilweise erreichten Bauteilbelastungen.

Dies gilt vor allem bei Antrieben, bei denen der Motor über einen Schneckentrieb und einen nachgeordneten Kurbeltrieb mit der Abtriebswelle verbunden und die Abtriebswelle pendelnd angetrieben ist, für das als Schneckenrad ausgebildete Antriebsrad, das auf einem in das Antriebsgehäuse eingepressten Bolzen gelagert ist und das aufgrund der Abstützung des seitlich zur Radebene auskragenden Kurbelzapfens auch erheblichen Verwindungskräften ausgesetzt ist.

Die angesprochenen Belastungen bedingen unter anderem auch eine entsprechend stabile Ausbildung des als Schneckenrad ausgebildeten Antriebsrades und des aufnehmenden Gehäuses, da von der konstruktiven Auslegung belastungsbedingt auftretende Abweichungen im Scheibenwischerantrieb zu erhöhten Spielen und insbesondere auch Wischwinkelungenauigkeiten führen, die das Wischergebnis beeinträchtigen und auch unerwünschte Geräusche nach sich ziehen können.

Bei einem aus der US 6 431,026 B1 bekannten Scheibenwischerantrieb ist das Antriebsrad mit der Wischerwelle über einen Kurbeltrieb verbunden, der am vom Wischblatt abgelegenen und zum Antriebsgehäuse deckelseitig benachbarten Ende der Wischerwelle angreift. Das Antriebsrad überdeckt zum Boden des Gehäuses hin eine Steuerplatine, die umgreifend zum Lagerbolzen des Antriebsrades innerhalb eines zum Antriebsgehäuse bodenseitigen Ringbundes angeordnet ist, der sich gegen die Radscheibe des Antriebsrades radial benachbart zu dessen Zahnkranz axial erstreckt. Der die Koppel des Kurbeltriebes zum Antriebsrad lagernde Zapfen ist axial gegen den Deckel des Antriebsgehäuses gleitend abgestützt.

Aus der DE 42 19 480 A1 ist weiter ein Scheibenwischerantrieb mit über einen Kurbeltrieb mit der Wischerwelle verbundenen Antriebsrad bekannt, bei dem zur Festlegung unterschiedlicher Wischfelder und Umkehrlagen das Antriebsrad in zwei koaxiale, axial getrennte Radscheiben aufgeteilt ist, die in verschiedenen Drehstellungen drehfest zu verbinden sind. Die eine der Radscheiben trägt den Zahnkranz, die andere Radscheibe ist dahingehend ausgebildet, bezogen auf unterschiedliche Wischfelder und/oder Umkehrlagen für die Koppel des Kurbeltriebs jeweils darauf abgestimmte Anlenklagen zum Antriebsrad wählen zu können. Der hierzu die Koppel mit dieser Radscheibe des Antriebsrandes verbindende Zapfen ist axial über eine Gleitabstützung zu einem den Kurbeltrieb übergreifenden Deckelteil abgestützt und stützt seinerseits die Koppel und die mit dieser verbundene Radscheibe gegen die den Zahnkranz tragende Radscheibe axial ab. Weiter ist auch eine Gleitabstützung der mit der Koppel verbundenen Radscheibe gegen die den Zahnkranz tragende Radscheibe dadurch realisiert, dass die mit der Koppel über den Zapfen verbundene Radscheibe durch eine axiale, gegen diese Radscheibe gerichtete Ausformung des Deckels abgestützt ist.

Bei einem aus der EP 0 316 831 bekannten Scheibenwischerantrieb, bei dem wiederum der Antrieb der Wischerwelle über einen Kurbeltrieb ausgehend von einem motorseitig angetriebenen, zur Wischerwelle koaxialen Antriebsrad erfolgt, ist zur Vermeidung von Kippbewegungen des Antriebsrades, die durch den Ebenenversatz zwischen dem Antriebsrad und der exzentrisch zum Antriebsrad an diesem angelenkten Koppel des Kurbelbetriebes bedingt sein und den Wirkungsgrad herabsetzen sowie Geräusche verursachen können, das Antriebsrad nahe seiner umfangsseitigen Verzahnung axial gegen den in Überdeckung zum Kurbeltrieb liegenden Deckel über einen Ringkörper abgestützt. Dieser ist radial von der Koppel durchsetzt und kann, in Abhängigkeit von der Bogenlänge der Durchsatzöffnung, deren Schwenkbewegung folgend über die Koppel mitgenommen um die Drehachse des Antriebsrades verdreht werden oder auch feststehend zum Gehäuse angeordnet sein, bei entsprechend großer Bogenlänge der Durchlassöffnung. Jeweils damit verbundene Relativbewegungen des Ringkörpers zum Deckel des Gehäuses und/oder zum Antriebsrad bedingen entsprechende Reibverluste.

### Offenbarung der Erfindung

Der Erfindung liegt die Aufgabe zugrunde, mit einfachen konstruktiven Maßnahmen einen Scheibenwischerantrieb der eingangs genannten Art dahingehend auszugestalten, dass belastungsbedingt auftretende Spiele und Wischwinkelungenauigkeiten bei geringen Reibverlusten zumindest weitgehend vermieden werden können.

Diese Aufgabe wird erfindungsgemäß mit den Merkmalen des Anspruches 1 gelöst. Die Unteransprüche geben zweckmäßige Weiterbildungen an.

Die erfindungsgemäße Ausgestaltung des Scheibenwischerantriebes trägt dem Umstand Rechnung, dass sich über die beispielsweise durch Getriebeglieder gebildete Antriebsverbindung zwischen Antriebsrad und pendelnd angetriebener Abtriebswelle auf das durchlaufend angetriebene Antriebsrad Querkräfte ergeben, deren unerwünschte Auswirkungen durch die erfindungsgemäße Abstützung des Antriebsrades entgegen der Querkraft im Bereich der den Umkehrlagen entsprechenden Drehlagen des Antriebsrades zumindest so weit gemindert werden, dass das Wischergebnis nicht beeinträchtigt wird, auch unangenehme Geräuschentwicklungen vermieden sind und möglichst geringe Reibverluste auftreten.

Hierzu wird mit konstruktiv und fertigungstechnisch sehr einfachen Mitteln gearbeitet, nämlich der Abstützung des Antriebsrades über axiale Auflaufflächen in Form von Rampen, die als zueinander korrespondierende Aufbauflächen einander gegenüberliegend am Antriebsgehäuse und am Antriebsrad vorgesehen sind.

Die in Umlaufrichtung lediglich bereichsweise, also sektorielle axiale Abstützung über als Rampen gestaltete Auflaufflächen mit einlaufend in die Auflauffläche vorgesehener Einlaufschräge führt dazu, dass sich die geforderte Abstützkraft einlaufend zur Tragzone der Auflauffläche hin verstärkt. Sowohl über den Verlauf der Einlaufschräge wie auch den Verlauf der Tragzone lassen sich ferner durch die Gestaltung von deren Konturen jeweils gewünschte Abstützverhältnisse realisieren.

Die Antriebsverbindung zwischen Antriebsrad und Abtriebswelle ist getrieblich als Kurbeltrieb gestaltet und somit sowohl konstruktiv wie auch fertigungstechnisch gut zu beherrschen.

Dies gilt auch in Bezug auf die Ausgestaltung des Kurbeltriebes mit einem seitlich gegenüberliegend zu den Auflaufflächen am Antriebsrad vorgesehenen, zur Achse des Antriebsrades parallelen Kurbelzapfen.

Das Antriebsrad ist bevorzugt durch das stirnseitig verzahnte Schneckenrad eines Schneckentriebes gebildet, der im Übergang des Kurbeltriebes zum Motor vorgesehen ist, so dass insgesamt ein kompakter Aufbau gegeben ist, der durch die erfindungsgemäße Ausgestaltung mit die Querkräfte auf das Antriebsrad abstützenden Auflaufflächen zusätzliche Qualität gewonnen hat.

Die Auflaufflächen sind insbesondere am Schneckenrad, zu seiner Achse radial versetzt, auf der zum Kurbelzapfen gegenüberliegenden Seite vorgesehen und axial gegen das Getriebegehäuse abgestützt, so dass, hinreichend steife Ausbildung des Schneckenrades quer zur Schneckenradebene vorausgesetzt, die auf das Schneckenrad bedingt durch den Kurbeltrieb einwirkenden Verwindungskräfte unmittelbar zwischen Schneckenrad und Gehäuse abgestützt werden können, wodurch sich günstige Belastungsverhältnisse ergeben und sowohl das Schneckenrad wie auch das Gehäuse leichter gebaut werden können.

Dies gilt insbesondere, wenn die vorgesehene axiale Abstützung in einem dem Kurbelradius entsprechenden Radialbereich erfolgt, gegebenenfalls hierzu auch radial nach außen versetzt.

Im Hinblick auf eine gewünschte axiale Abstützung bei möglichst geringen Reibverlusten erweist es sich als zweckmäßig, für zusammenwirkende Auflaufflächen entsprechende Werkstoffpaarungen vorzusehen, so beispielsweise eine der Auflaufflächen mit einer reibungsreduzierenden Beschichtung zu versehen oder einem Einsatzkörper zuzuordnen, der zum Gehäuse oder zum Schneckenrad fixiert ist und aus einem Material mit geringem Reibungskoeffizienten, beispielsweise Kunststoff, besteht.

In Anbetracht der durch die Erfindung erreichten günstigen Belastungsverhältnisse kann aber auch das Schneckenrad insgesamt, oder zumindest im Bereich der Radscheibe als Kunststoffrad ausgebildet sein, an dem eine Auflaufschräge entsprechend angeformt ist. Entsprechendes gilt bezüglich des Gehäuses.

Weitere Vorteile und zweckmäßige Ausführungen sind den Ansprüchen, der Figurenbeschreibung und den Zeichnungen zu entnehmen. Es zeigen:
- Fig. 1 und 2: elektromotorische Scheibenwischerantriebe mit pendelnd anzutreibender Abtriebswelle für den jeweiligen Scheibenwischer und mit der Abtriebswelle über einen Kurbeltrieb verbundenem Schneckenrad eines Schneckentriebes, wobei den einander gegenüberliegenden Umkehrlagen entsprechende Antriebsstellungen gezeigt sind,
- Fig. 3: in einer der Fig. 1 und 2, bezogen auf die Blickrichtung, entsprechenden Ansicht die hinter dem Schneckenrad liegende Hälfte des Getriebegehäuses mit diesem zugeordneten Auflaufflächen,
- Fig. 4: eine isolierte Darstellung der Auflaufflächen in Fig. 3 in einer Blickrichtung gemäß Pfeil IV in Fig. 3,
- Fig. 5: das in Fig. 3 nicht dargestellte Schneckenrad in einer zur Darstellung gemäß Fig. 3 seitlich nach rechts ausgeklappten Rückansicht und mit Auflaufflächen, die zu den gehäuseseitigen Auflaufflächen gemäß Fig. 3 korrespondieren, und
- Fig. 6: in einer der Blickrichtung VI-VI in Fig. 5 entsprechenden Darstellung die in Fig. 5 rückseitig zum Schneckenrad vorgesehenen Auflaufflächen.

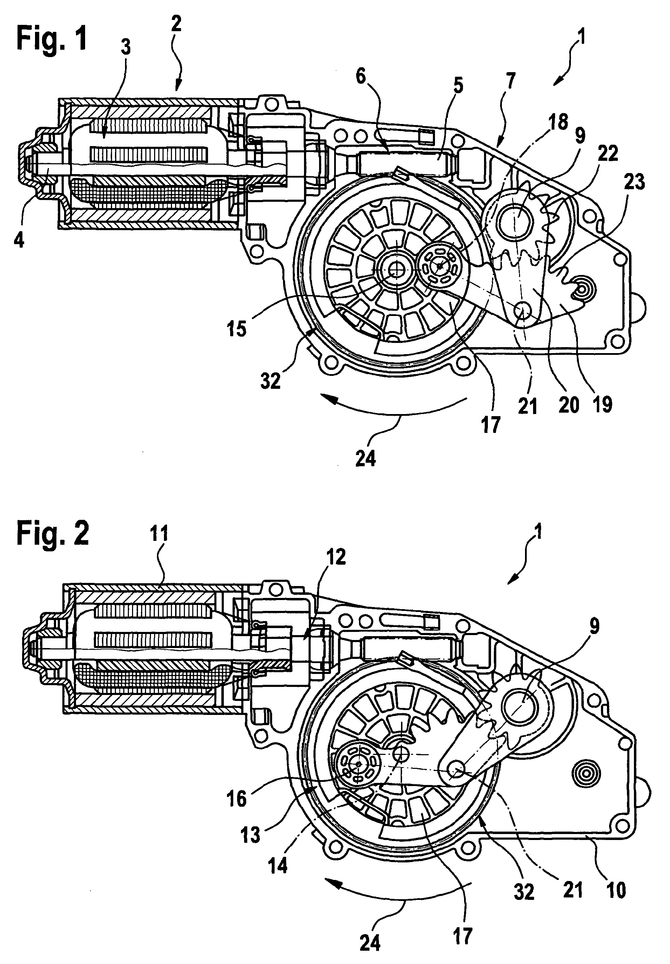

Der in Fig. 1 teilweise schematisiert dargestellte Scheibenwischerantrieb 1 ist längsmittig geschnitten und umfasst einen als Elektromotor ausgebildeten Motor 2 mit einem Anker 3 und einer Ankerwelle 4. Zur Ankerwelle 4 liegt fluchtend die Schnecke 5 eines Schneckentriebes 6, der Bestandteil der im Übergang zwischen dem Motor 2 und einem nicht dargestellten Scheibenwischer liegenden Getriebes 7 ist. Der Schneckentrieb 6 ist über Getriebeglieder in Form eines Kurbeltriebs 8 mit der zum Scheibenwischer führenden Abtriebswelle 9 verbunden. Das Gehäuse 10 des Getriebes 7 ist lagefest mit dem Gehäuse 11 des Motors verbunden, und die Ankerwelle 4 bildet zusammen mit der Schnecke 5 einen Wellenstrang 12.

Die Schnecke 5 des Schneckentriebes 6 steht in Eingriff zum stirnseitig verzahnten, als Schneckenrad 13 ausgebildeten Antriebsrad 32, dessen Achse mit 14 bezeichnet ist und das über einen Bolzen 15 im Getriebegehäuse 10 abgestützt ist.

Das Schneckenrad 13 ist radial zur Achse 14 versetzt mit einem Kurbelzapfen 16 verbunden, der in der Scheibe 17 des Schneckenrades 13 gehalten ist, so dass sich ein im Abstand der Achse 18 des Kurbelzapfens 16 zur Achse 14 des Schneckenrades 13 entsprechender Kurbelradius ergibt.

Auf dem Kurbelzapfen 16 ist eine Koppel 19 als Verbindung zu einer Schwinge 20 gelagert. Die Koppel 19 und die Schwinge 20 sind über eine Achse 21 verbunden. Die konzentrisch zur Abtriebswelle 9 mit dieser drehfest verbundenen Schwinge 20 sowie die Koppel 19 tragen jeweils ein Zahnkranzsegment 22, 23. Das der Schwinge 20 zugeordnete Zahnkranzsegment 22 liegt koaxial zur Schwinge 20, das der Koppel 19 zugeordnete Zahnkranzsegment 23 erstreckt sich konzentrisch zur Achse 21, über die die Schwinge 20 an der Koppel 19 drehbar angebunden ist.

Bei gleicher Drehrichtung 24 des Schneckenrades 13 ergibt sich, wie Fig. 1 und 2 zeigen, über den in der Verbindung des Schneckenrades 13 zur Abtriebswelle 9 liegenden Kurbeltrieb 8 eine pendelnde, also hin und her gehende Drehbewegung der Abtriebswelle 9 mit entsprechenden Umkehrlagen. Diesen Umkehrlagen der Abtriebswelle 9 entsprechen seitens des Schneckenrades 13 Umkehrlagen, und zwar einander im Wesentlichen diametral zur Achse 14 des Schneckenrades 13 gegenüberliegende Umkehrlagen des Kurbeltriebes 8, wobei, bezogen auf die Drehrichtung 24, die eine dieser Umkehrlagen in Fig. 1 und die andere in Fig. 2 dargestellt ist. Den Umkehrlagen entspricht eine Lage des Kurbelzapfens 16 auf einer Diagonalen zur Achse 14 des Schneckenrades 13. Die Umkehrlagen ergeben sich abhängig von den Abmessungen des Kurbeltriebes 8 und der Lage der Achsen der Abtriebswelle 9 und des Schneckenrades 13, wobei über die entsprechenden Maße der Schwenkwinkel der Abtriebswelle 9 und des damit verbundenen Scheibenwischers zu beeinflussen ist.

Der Kurbelzapfen 16 ist seitlich auskragend im Bereich der Radscheibe des Schneckenrades 13 vorgesehen, und zwar bei paralleler Lage zur Achse 14 des Schneckenrades 13 und zur Achse des Kurbeltriebes 8. Entsprechend der seitlich auskragenden Anordnung des Kurbelzapfens 16 zum Schneckenrad 13, und bezogen auf das dargestellte Ausführungsbeispiel frontseitig zum Schneckenrad 13 ergeben sich in Abhängigkeit von den zu übertragenden Kräften und Momenten Belastungen des Schneckenrades 13 auch quer zu dessen Radebene, die zu einer Verwindung des Schneckenrades 13 und/oder zu Änderungen der Lage der Achse 14 des Schneckenrades zum Gehäuse 10 führen können.

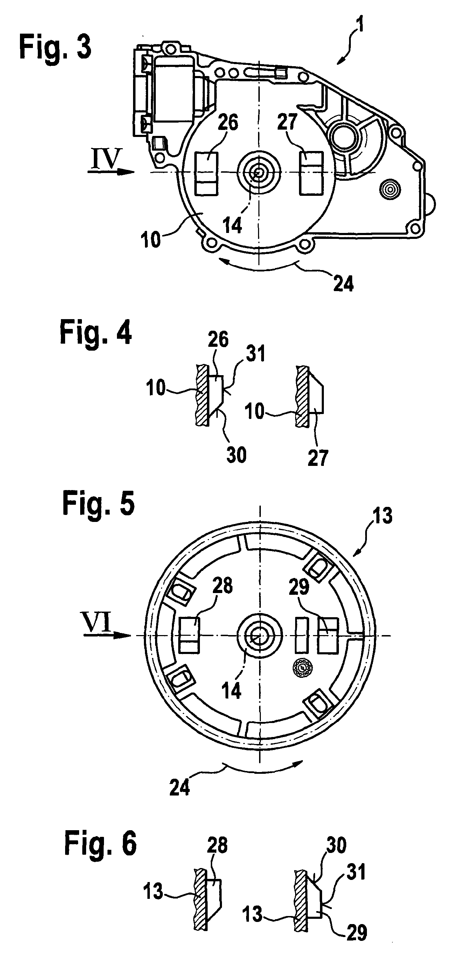

Um diesbezügliche Lageänderungen und/oder Verformungen bei möglichst leichter Bauweise sowohl für das Gehäuse 10 des Getriebes wie auch für das Schneckenrad 13 zumindest weitgehend vermeiden zu können, sind im Ausführungsbeispiel dem Schneckenrad 13 rückseitig, wie aus Fig. 5 ersichtlich, und dem Gehäuse 10 des Getriebes an der hierzu korrespondierenden Innenseite als zur Rückseite des Schneckenrades 13 korrespondierender, gehäuseseitiger "Frontseite", Auflaufflächen 26 bis 29 zugeordnet. Die gehäuseseitigen Auflaufflächen sind mit 26 und 27 bezeichnet, die schneckenradseitigen Auflaufflächen mit 28 und 29. Die Auflaufschrägen 26, 27 am Gehäuse liegen einander zur Achse 14 des Schneckenrades 13 diametral gegenüber, bezogen auf die Drehrichtung 24 im Bereich der aus Fig. 1 und 2 ersichtlichen Umkehrlagen, in denen die Auflaufflächen 28, 29 des Schneckenrades 13 im Wesentlichen in Überdeckung zur jeweils korrespondierenden, gehäuseseitigen Auflauffläche 26 bzw. 27 stehen.

Über die einander diametral gegenüberliegenden Auflaufflächen 26 bis 29 wird das Schneckenrad 13 im Bereich der Umkehrlagen gegen das Gehäuse 9 abgestützt, so dass die insbesondere in diesen Umkehrlagen kritischen Belastungen nicht nur über den das Schneckenrad 13 tragenden Bolzen 15 in das Getriebegehäuse 9 eingeleitet werden, sondern auch über unmittelbare axiale Abstützung des Schneckenrades 13 gegen das Getriebegehäuse 10, wobei über diese axiale Abstützung des Schneckenrades 13 gegen das Getriebegehäuse 10 im radial mittleren Bereich des Schneckenrades 13 sowohl Verwindungen des Schneckenrades wie auch Winkeländerungen in der Achslage des Schneckenrades 9 weitgehend vermieden werden können, da das Schneckenrad 13 in den besonders belasteten Umkehrlagen entsprechend zum Gehäuse 10 abgestützt ist und dadurch auch wiederum das Gehäuse 10 entlastet ist. Damit sind auch Voraussetzungen für eine möglichst leichte Gestaltung des Schneckenrades 13 und des Gehäuses 10 geschaffen.

Die Auflaufflächen 26 bis 28 weisen bevorzugt Rampenform auf und haben somit eine in die eigentliche Tragzone 31 insbesondere verlaufend übergehende Einlaufschräge 30, die für die gehäuseseitigen Auflaufflächen 26, 27 entgegen der Drehrichtung 24 abfällt. Entsprechendes gilt bezüglich der Auflaufflächen 28, 29 des Schneckenrades 13, das in Fig. 5, bezogen auf eine Betriebslage gemäß Fig. 1 und 2, zum Gehäuse 10 gemäß Fig. 3 in gespiegelter Rückenlage, also mit der Rückseite nach oben, dargestellt ist. Beim Einlaufen in den Bereich der jeweiligen Umkehrlage kommen drehstellungsabhängig mit den gehäuseseitigen Auflaufflächen 26, 27 die Auflaufflächen 28, 29 am Schneckenrad 13 alternierend zur Überdeckung. Die Einlaufschrägen 30 gewährleisten dabei ein verlaufendes Einlaufen in die Tragzonen 31 der jeweiligen Auflaufflächen 26 bis 29, wobei es aber im Rahmen der Erfindung liegt, die Auflaufflächen 26 bis 29 verlaufend ansteigend auszubilden, sowie auch unterschiedliche Rampenwinkel vorzusehen. Insbesonders kann die Erstreckung der Auflaufflächen 26 bis 29, in Abhängigkeit von ihrer Zuordnung zum Schneckenrad 13 bzw. zum Getriebegehäuse 10, auch unterschiedlich sein. Ferner sind die Darstellungen in Fig. 3 bis 6 bezüglich der in Drehrichtung 24 gemessenen Bogenlänge der Auflaufflächen 26 bis 29 nur beispielshaft, können also auch größere Sektoren überdecken als im Ausführungsbeispiel gezeigt. Dies gilt auch bezüglich der radialen Anordnung und Erstreckung der Auflaufflächen 26 bis 29, wobei eine erfindungsgemäß bevorzugte Lage jene ist, bei der die Auflaufflächen 26 bis 29 etwa den gleichen radialen Abstand zur Achse 14 des Schneckenrades 13 aufweisen wie der Kurbelzapfen 16. Insbesondere eine demgegenüber auch radial nach außen verbreiterte oder versetzte Ausgestaltung der Auflaufflächen 26 bis 29 liegt aber auch im Rahmen der Erfindung.

## Patentansprüche

1. Elektromotorischer Scheibenwischerantrieb (1) für Fahrzeuge, mit einer scheibenwischerseitigen, pendelnd anzutreibenden Abtriebswelle (9), einem Antriebsrad (32), das den Umkehrlagen der Abtriebswelle (9) entsprechende Drehlagen durchläuft, und mit einer Antriebsverbindung des Antriebsrades (32) zur Abtriebswelle (9), über die das Antriebsrad mit einer antriebsbedingt quer zu seiner Radebene wirkenden Querkraft beaufschlagt ist, wobei das Antriebsrad (32) entgegen der Querkraft gegen das aufnehmende Gehäuse (10) über Auflaufflächen (26, 27, 28, 29) axial abgestützt ist,
**dadurch gekennzeichnet, dass** die axiale Abstützung durch als Rampen ausgebildete Auflaufflächen (26, 27, 28, 29) gebildet ist, die im Bereich von den Umkehrlagen der Abtriebswelle (9) entsprechenden Drehlagen gehäuseseitig und gegenüberliegend am Antriebsrad (32) in einander diametral zur Achse des Antriebsrades (32) gegenüberliegenden Radialbereichen des Antriebsrades (32) vorgesehen sind.

2. Scheibenwischerantrieb nach Anspruch 1,
**dadurch gekennzeichnet, dass** die Rampen im radial mittleren Bereich des Antriebsrades (32) vorgesehen sind.

3. Scheibenwischerantrieb nach einem der vorhergehenden Ansprüche,
**dadurch gekennzeichnet, dass** die Rampen, die seitens des Gehäuses (10) vorgesehen sind, an ihren zur Drehrichtung (24) des Antriebsrades (32) entgegengesetzten Enden mit einer Einlaufschräge (30) versehen sind, die gegen eine in Drehrichtung (24) folgende Tragzone (31) ansteigt.

4. Scheibenwischerantrieb nach einem der vorhergehenden Ansprüche,
**dadurch gekennzeichnet, dass** die Rampen, die seitens des Antriebsrades (32) vorgesehen sind, in ihren in Drehrichtung (24) vorderen Enden mit einer Einlaufschräge (30) versehen sind, die entgegen der Drehrichtung (24) in eine anschließende Tragzone (31) ansteigt.

5. Scheibenwischerantrieb nach einem der vorhergehenden Ansprüche,
**dadurch gekennzeichnet, dass** die Antriebsverbindung des Antriebsrades (32) zur Abtriebswelle (9) durch einen Kurbeltrieb gebildet ist, der einen seitlich gegenüberliegend zu den Rampen vorgesehenen, zur Achse des Antriebsrades (32) parallelen Kurbelzapfen (16) aufweist.

## Claims

1. Electric motor-driven windscreen wiper drive (1) for vehicles, with a windscreen-wiper-side output shaft (9) which can be driven in an oscillating manner, a drive wheel (32) which passes through rotational positions corresponding to the reversing positions of the output shaft (9), and with a driving connection of the drive wheel (32) to the output shaft (9), via which the drive wheel is acted upon with a transverse force caused by the drive to act transversely with respect to the plane of the drive wheel, wherein the drive wheel (32) is axially supported against the receiving housing (10) counter to the transverse force via run-on surfaces (26, 27, 28, 29), **characterized in that** the axial support is formed by run-on surfaces (26, 27, 28, 29) which are in the form of ramps and, on the housing side, are provided in the region of rotational positions corresponding to the reversing positions of the output shaft (9) and, opposite thereto, are provided on the drive wheel (32) in radial regions of the drive wheel (32) diametrically opposite one another with respect to the axis of the drive wheel (32).

2. Windscreen wiper drive according to Claim 1, **characterized in that** the ramps are provided in the radially central region of the drive wheel (32).

3. Windscreen wiper drive according to either of the preceding claims, **characterized in that** the ramps which are provided on the part of the housing (10) are provided at their ends opposed to the direction of rotation (24) of the drive wheel (32) with an entry slope (30) which rises towards a supporting zone (31) following in the direction of rotation (24).

4. Windscreen wiper drive according to one of the preceding claims, **characterized in that** the ramps which are provided on the part of the drive wheel (32) are provided in their front ends in the direction of rotation (24) with an entry slope (30) which rises counter to the direction of rotation (24) into an adjoining supporting zone (31).

5. Windscreen wiper drive according to one of the preceding claims, **characterized in that** the driving connection of the drive wheel (32) to the output shaft (9) is formed by a crank drive which has a crank pin (16) which is provided laterally opposite the ramps and is parallel to the axis of the drive wheel (32).

## Revendications

1. Entraînement d'essuie-glace (1) à moteur électrique pour véhicules, comprenant un arbre de sortie (9) situé du côté de l'essuie-glace et devant être entraîné de manière oscillante, comprenant une roue d'entraînement (32) qui passe par des positions angulaires correspondant aux positions d'inversion de l'arbre de sortie (9), et comprenant une liaison d'entraînement de la roue d'entraînement (32) par rapport à l'arbre de sortie (9), par le biais de laquelle liaison d'entraînement la roue d'entraînement est sollicitée par une force transversale due à l'entraînement et agissant transversalement à son plan de roue, la roue d'entraînement (32) s'appuyant, à l'encontre de la force transversale, axialement contre le boîtier récepteur (10) par le biais de surfaces de contact (26, 27, 28, 29),
**caractérisé en ce que** l'appui axial est formé par des surfaces de contact (26, 27, 28, 29) réalisées sous forme de rampes, lesquelles surfaces sont prévues du côté du boîtier dans la région de positions angulaires correspondant aux positions d'inversion de l'arbre de sortie (9) et en regard sur la roue d'entraînement (32) dans des régions radiales de la roue d'entraînement (32) diamétralement opposées l'une à l'autre par rapport à l'axe de la roue d'entraînement (32).

2. Entraînement d'essuie-glace selon la revendication 1,
**caractérisé en ce que** les rampes sont prévues dans la région radialement centrale de la roue d'entraînement (32).

3. Entraînement d'essuie-glace selon l'une quelconque des revendications précédentes,
**caractérisé en ce que** les rampes qui sont prévues du côté du boîtier (10) sont pourvues, à leurs extrémités opposées au sens de rotation (24) de la roue d'entraînement (32), d'un biseau d'introduction (30) qui s'élève en direction d'une zone de support (31) suivante dans le sens de rotation (24).

4. Entraînement d'essuie-glace selon l'une quelconque des revendications précédentes,
**caractérisé en ce que** les rampes qui sont prévues du côté de la roue d'entraînement (32) sont pourvues, dans leurs extrémités avant dans le sens de rotation (24), d'un biseau d'introduction (30) qui s'élève en sens inverse au sens de rotation (24) dans une zone de support (31) adjacente.

5. Entraînement d'essuie-glace selon l'une quelconque des revendications précédentes,
**caractérisé en ce que** la liaison d'entraînement de la roue d'entraînement (32) par rapport à l'arbre de sortie (9) est formée par une commande à manivelle qui comprend un maneton de manivelle (16) prévu latéralement en regard des rampes et parallèle à l'axe de la roue d'entraînement (32).
